# EUROPEAN PATENT SPECIFICATION

(11) **EP 3 640 142 B1**
(45) Date of publication and mention of the grant of the patent: **17.05.2023**
(21) Application number: 18382745.0
(22) Date of filing: 18.10.2018
(51) Int. Cl.: B64D 37/06, B64D 37/22, B64D 37/32, B64D 37/16

(54) **A DOUBLE-WALL TANK FOR FUEL STORAGE IN AIRCRAFTS**
DOPPELWANDIGER TANK ZUR KRAFTSTOFFSPEICHERUNG IN FLUGZEUGEN
RÉSERVOIR À DOUBLE PAROI POUR LE STOCKAGE DE CARBURANT DANS DES AÉRONEFS

(43) Date of publication of application: 22.04.2020
(73) Proprietor: Airbus Defence and Space, S.A.U., 28906 Getafe - Madrid (ES)
(72) Inventor: ESPINOSA SANCHEZ, Martin, 28906 Getafe (Madrid) (ES); VALDEOLMOS TRABA, Javier, 28906 Getafe (Madrid) (ES)
(74) Representative: Elzaburu S.L.P.

(56) References cited:
- US-A- 2 653 780
- US-A- 4 214 721
- US-A- 4 615 455
- US-A1- 2018 093 780
- US-B1- 6 260 544

## Description

The present invention refers to a double-wall tank for fuel storage for aircrafts with leakage collection capabilities and a collapsible inner wall.

### Background of the invention

Several missions assigned to aicrafts require a very large amount of fuel. In those scenarios, the fuel stored within aircrafts basic tanks may not be enough. For those cases, it is possible to provide said aircrafts with additional fuel tanks which can be located within underwing pods or in the cargo compartment where available.

Currently, fuel tanks within aircraft fuselage can be used for applications such as aircraft range extension by providing tanks connected to the aircraft fuel system to supply extra fuel. Fuel tanks can also be used for ground refueling operations by providing tanks acting as a pay-load without interfaces with aircraft systems so they can be used to supply fuel on remote bases for other vehicles. Another well-known application can be using fuel tanks for aerial refueling operations. In this regard, fuel tanks are connected to an air to air refueling system. In all these cases, fuel tanks must fulfill applicable certification requirements.

Some of these requirements are:
In order to obtain a civil certification, a fuel tank comprising a double-wall is required to collect and monitor potential leakage. Typically a non-collapsible nitrile rubber tank is fitted within a metallic tank that collects potential leakage. In this respect, non-collapsible tanks can have space available for fuel vaporization within the tank that increases flammability.

There is an exposure of differential pressure between the fuel tank and the pressurized cargo compartment where the fuel tank is located. Depending on the application the fuel tank can be connected to the external ambient pressure. This scenario makes mandatory a permanent dedicated installation along the cargo compartment to vent the inner wall. Furthermore, the fuel tank must fulfil flammability requirements, and therefore the fuel vapours quantity, i.e. the air volume within the fuel tank is critical.

As previously mentioned, conventional double-wall fuel tanks, in which the inner wall is not collapsible require ventilation for the inner wall to level off differential pressure. In this regard, due to the high presence of fuel vapors that increase flammability, these fuel tanks are affected by heavy certification requirements. The presence of fuel vapors leads to a high flammability risk in which parameters like the vapors volume, exposure time and temperature are critical to achieve the tank certification. In these cases, for a fuel tank flammability quantitative analysis, Monte Carlo analysis considering parameters related to the analysis of the distribution of known flight data can be considered in order to obtain the required certification.

Therefore, a fuel tank that fulfils the double-wall requirement for leakage collection that does not request permanent provision on the aircraft for the inner wall ventilation and minimize the risk of flammability by reducing the vapors volume within the tank would be desired.

US4214721A and US2653780A relate to improved storage systems specially intended for use in aircraft.

### Description of the invention

The proposed double-wall fuel tank according to the present disclosure solves the aforementioned drawbacks and provides other advantages that are described below.

In one aspect, the present invention refers to a double-wall tank for fuel storage in aircrafts as defined by claim 1. The double-wall tank can be located within underwing pods of the aircraft or in the cargo compartment. The tank comprises a reservoir to store fuel having a collapsible wall and a housing having a rigid wall and a base. The housing is adapted to contain the reservoir and collect any possible leakage from the reservoir. The base of the housing permits establishing the reservoir within the housing.

The reservoir can be defined in two halves, an upper half and a lower half. The reservoir can adapt its geometry to at least the base of the housing. In this respect, the reservoir is contained within the housing symmetrically to the base of the housing and is fixed to the housing by its lower half. The lower half of the collapsible reservoir reproduces the rigid walls and the base geometry of the reservoir permitting an appropriate fit of the reservoir within the housing. This fit permits that during the emptying of the reservoir, the upper half of the reservoir collapses over the lower half of the reservoir causing an optimal evacuation of liquid fuel within the reservoir. Furthermore, the upper half of the reservoir has a muffin shape that fits every fluid condition under lateral loads that could be suffered by the reservoir during e.g. aerial refuelling without considerably stressing the reservoir material. This specific geometry comprises the minimum amount of material that would permit the reservoir to deal with lateral loads and to collapse over itself during emptying of the reservoir. The surface of the upper half of the reservoir may be greater than the surface of the lower half. Additionally, the volume of the upper half may exceed the volume of the lower half.

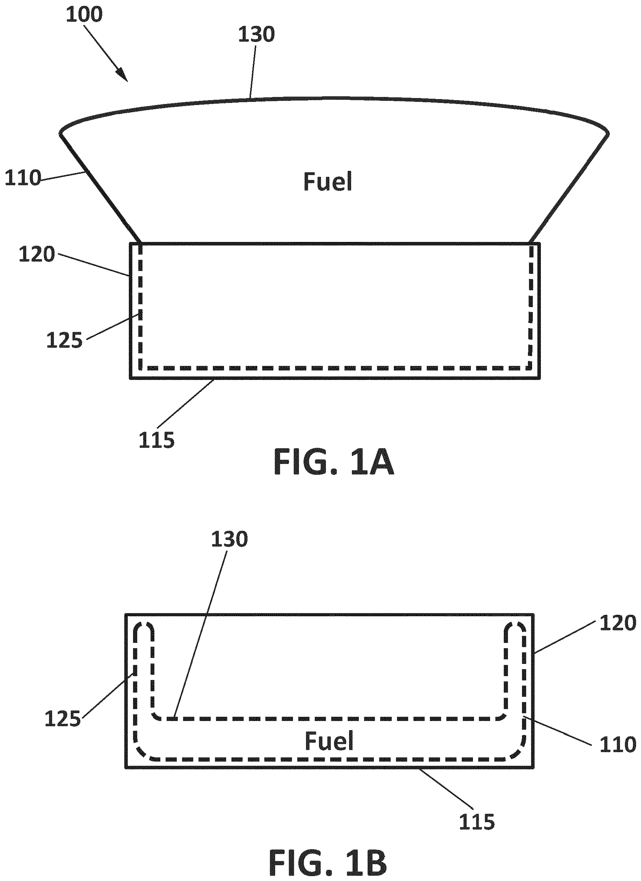

According to claim 1, the reservoir is a fuel bladder made of a flexible cloth, e.g. nylon fiber within a urethane matrix which allows multiple filling cycles without failure. Nitrile Rubber (NBR) or Hydrogenated nitrile butadiene rubber (HNBR) also allow multiple filling cycles without failure. bladders is collapsible and provides temporary or long term storage for fuel. During the emptying of the bladder, the upper half of the bladder can collapse over the lower half causing an optimal evacuation of liquid fuel within the reservoir as shown in figure 1B of this disclosure. According to claim 1, the upper half of the bladder comprises a muffin shape as shown in figure 1A of the disclosure. This specific shape permits the bladder to fit every fluid condition under loads as e.g. lateral loads exerted on the bladder with respect to the horizontal plane defined by the base of the housing or compression or tension loads.

Furthermore, the reservoir can comprise air purging means that permits to purge air from the reservoir in order to contain fuel in liquid state inside the reservoir after filling the reservoir so the reservoir adapts its volume to the fuel volume. Due to the collapsible condition of the reservoir, the reservoir can absorb any thermal expansion of the fuel by varying its volume.

In some examples, the housing is a shroud made of metallic standard construction materials or composite. In one example, the shroud is continuously connected to ambient external pressure upon request. In other examples, the shroud can be pressurized at ground ambient prior to delivering fuel. The shroud functions as the outer wall of the double fuel tank and therefore, it can collect leakage from the reservoir. Furthermore, the housing and the lower half of the reservoir can comprise tank interfaces for provisioning the fuel liquid into the tank. Moreover, the housing comprises differential pressure sensors to detect a fuel load as e.g. differential pressure sensors.

Hence, the proposed tank for fuel storage presents at least the following advantages: The collapsible reservoir adapts its volume to the fuel volume and hence, there is no need for ventilation so the proposed tank simplifies its installation within the aircraft. This is an important improvement for those applications in which the tank is a "plug & fly" provision in a multirole aircraft.

The specific geometry of the reservoir permits the reservoir to stand loads exerted on the reservoir without excessively stressing the reservoir cloth.

Furthermore, the selected geometry is a geometry that minimizes the amount of cloth required to stand loads and permit that the upper half of the bladder can collapse over the lower half permitting an optimal evacuation of liquid fuel.

The volume available for fuel vaporization is negligible so the flammability risk is much mitigated compared to conventional fuel tanks. This is an important improvement in terms of certification requirements fulfillment.

### Brief description of the drawings

For a better understanding of the above explanation and for the sole purpose of providing an example, some non-limiting drawings are included that schematically depict a practical embodiment.

Figures 1A and 1B show an example of a double-wall fuel tank according to the present disclosure.

### Description of a preferred embodiment

Figure 1A shows a double-wall fuel tank (100) according to the present disclosure. The fuel tank (100) comprises a fuel bladder (110) containing fuel as reservoir. The fuel bladder (100) is established within a shroud (120). A function of the bladder (110) is to contain the fuel. The bladder is collapsible and can adapt its volume to the liquid fuel volume. The shroud (120) is made of rigid material and is adapted to collect potential leakage from the bladder (110) and to withstand differential pressure conditions during e.g. aerial refuelling.

The bladder (110) is made a very flexible cloth, e.g. nylon fiber within a urethane matrix which allows multiple filling cycles without failure. The flexibility and adaptability of the bladder is achieved by causing the cloth of the bladder (110) to bend over itself. This may also happen during an emptying cycle. The bladder (110) can be purged of air during and/or after the filling of the bladder (110) by using air purge means and therefore the bladder (100) may only contain fuel in liquid state and achieve the vacuum inside the bladder (110). This can minimize the room for vapors within the bladder (110) the whole refueling operation, and hence, the risk of flammability by avoiding the exposition of the fuel tank to fuel vapors can be considerably reduced. The bladder (110) comprises two halves, an upper half (130) and a lower half (125).

The bladder specific geometry is shown in figure 1A. This geometry ensures that under lateral loads suffered by the bladder (110) during aerial transportation and/or refueling, the bladder cloth is able to adapt its shape to the fluid without stressing or damaging the cloth. Hence, the upper half (130) comprises a specific geometry as a "muffin" shape as shown in figure 1A that fits every fluid condition under lateral loads that could be suffered by the bladder (110) during aerial refuelling without considerably stressing the bladder cloth. The top of the upper half (130) comprises the largest surface of cloth which provides a specific "muffin" shape that permits the cloth of the bladder (110) to collapse over itself. This specific bladder geometry comprises the minimum amount of cloth that permits the bladder to deal with lateral loads or compression loads and to collapse over itself during emptying of the bladder. The shape of the upper half 130 may exceed the volume of the shroud (120) as shown in figure 1A.

The shroud (120) is rigid and can be made of metallic standard construction or composite materials. The shroud (120) provides the bladder (110) a rigid structure having walls and a base (115) that permit the fixation of the bladder (110) to restrain its movement during accelerated conditions. Additionally, the shroud (120) can collect and monitor by a suitable device any potential leakage from the bladder (110). In this respect, in the case of overfilling of the fuel tank, the bladder may fail prior to the shroud pressurization, spilling the fuel within the shroud. In some examples, the shroud (120) can comprise differential pressure sensor to control the amount of fuel within the bladder and interfaces to fill and empty the bladder.

The bladder (110) is contained within the shroud (120) symmetrically to the base (115) of the shroud (120). The lower half (125) will be fixed to the shroud (120). In particular, the outer surface of the lower half (125 can be symmetrically fixed to the base (115) and the walls of the shroud (120). These structural restraints permit that during emptying the bladder (110), the upper half (130) collapses over the lower half (125) as shown in figure 1B causing an optimal evacuation of liquid fuel within the reservoir. The upper half (130) having a "muffin" shape will have more volume than the lower half (125) in order to accommodate the fluid under all conditions of fluid quantity and lateral loads without stressing the bladder cloth. The bladder (110) volume and geometry has to be calculated in such a way that the amount of cloth is minimized to avoid extra cloth that could cause extra bends on the cloth that may impede the bladder (110) to collapse over itself. The discharge port and most of the system interfaces can be located on the lower half (125) and the shroud (120). The purge port can be located on the upper half (130) lifted up by internal floats.

To operate the fuel system, the bladder (110) will be isolated until the fuel is requested. The bladder volume will be higher than the shroud compartment where the bladder (110) is located. However, the bladder (110) will not be fully filled in order to absorb any thermal expansion of the fuel by varying its volume. The total volume of the shroud (120) will be calculated to keep air pressure within secure limits. In this respect, changes on the bladder volume may imply air pressure changes in the shroud (120).

The shroud (120), depending on the application and use of the double-wall fuel tank, might be continuously connected to ambient external pressure (if required for that particular use of the fuel tank) or it might be isolated until the fuel is demanded. In the first case, the shroud (120) will only withstand differential pressure between the cargo compartment where the fuel tank is located and external ambient. In the second case, the shroud (120) will be pressurized at ground ambient until it is relieved to deliver fuel. During its pressurization, the shroud (120) shall withstand differential pressures due to altitude and temperature changes.

Even though reference has been made to a specific embodiment of the invention, it is obvious for a person skilled in the art that the fuel tank described herein is susceptible to numerous variations and modifications without departing from the scope of protection defined by the attached claims.

## Claims

1. A double-wall tank (100) for fuel storage in aircrafts, the tank (100) comprising:
a reservoir (110) to store fuel, the reservoir (110) having a collapsible wall and comprising an upper half (130) and a lower half (125);
wherein the reservoir (110) is a fuel bladder made of a flexible cloth and the upper half (130) comprises a muffin shape;
a housing (120) adapted to contain the reservoir (110), the housing (120) comprising rigid walls and a base,
wherein the reservoir (110) is fixed to the housing (120) and within said housing (120) by the lower half (125) and not by the upper half (130) of said reservoir (110) in a way so that the lower half (125) reproduces the rigid walls and the base geometry so that the upper half (130) collapses over the lower half (125) during the emptying of the reservoir (110).

2. The double-wall tank according to claim 1, wherein the reservoir comprises air purge means.

3. The double-wall tank according to any of the preceding claims, wherein the housing is a shroud made of metallic material or composite.

4. The double-wall tank according to claim 3, wherein the shroud comprises means to contain a leakage of the reservoir.

5. The double-wall tank according to claim 1, wherein the lower half of the reservoir and the housing comprise tank interfaces.

6. The double-wall tank according to claim1, wherein the housing comprises differential pressure sensors to detect a fuel load.

## Patentansprüche

1. Doppelwandiger Tank (100) zur Kraftstofflagerung in Flugzeugen, wobei der Tank (100) Folgendes umfasst:
einen Behälter (110) zum Lagern von Kraftstoff, wobei der Behälter (110) eine zusammenklappbare
Wand aufweist und eine obere Hälfte (130) und eine untere Hälfte (125) umfasst;
wobei der Behälter (110) eine aus einem flexiblen Tuch hergestellte Kraftstoffblase ist und die obere Hälfte (130) die Form eines Muffins umfasst;
ein Gehäuse (120), das dazu angepasst ist, den Behälter (110) aufzunehmen, wobei das Gehäuse (120) starre Wände und eine Basis umfasst,
wobei der Behälter (110) an dem Gehäuse (120) und innerhalb des Gehäuses (120) durch die untere Hälfte (125) und nicht durch die obere Hälfte (130) des Behälters (110) in einer Weise befestigt ist, dass die untere Hälfte (125) die starren Wände und die Geometrie der Basis wiedergibt, sodass die obere Hälfte (130) während des Entleerens des Behälters (110) über der unteren Hälfte (125) zusammenfällt.

2. Doppelwandiger Tank nach Anspruch 1, wobei der Behälter eine Luftspüleinrichtung umfasst.

3. Doppelwandiger Tank nach einem der vorhergehenden Ansprüche, wobei das Gehäuse eine Hülle ist, die aus metallischem Material oder Verbundmaterial hergestellt ist.

4. Doppelwandiger Tank nach Anspruch 3,
wobei die Hülle Mittel
zum Eindämmen einer Leckage des Lagers umfasst.

5. Doppelwandiger Tank nach Anspruch 1, wobei die untere Hälfte des Behälters und das Gehäuse Tankschnittstellen umfassen.

6. Doppelwandiger Tank nach Anspruch 1, wobei das Gehäuse Differenzdrucksensoren umfasst, um eine Kraftstofflast zu ermitteln.

## Revendications

1. Réservoir à double paroi (100) pour le stockage de carburant dans des avions, le réservoir (100) comprenant :
un réservoir (110) pour stocker du carburant, le réservoir (110) ayant un une paroi et comprenant une moitié supérieure (130) et une moitié inférieure (125) ;
dans lequel le réservoir (110) est une vessie à carburant faite d'un tissu flexible et la moitié supérieure (130) comprend une forme de muffin ;
un logement (120) adapté pour contenir le réservoir (110), le logement (120) comprenant des parois rigides et une base,
dans lequel le réservoir (110) est fixé au logement (120) et à l'intérieur dudit logement (120) par la moitié inférieure (125) et non par la moitié supérieure (130) dudit réservoir (110) d'une manière tel que la moitié inférieure (125) reproduit les parois rigides et la géométrie de base de sorte que la moitié supérieure (130) s'affaisse sur la moitié inférieure (125) pendant la vidange du réservoir (110).

2. Réservoir à double paroi selon la revendication 1, dans lequel le réservoir comprend des moyens de purge d'air.

3. Réservoir à double paroi selon l'une des revendications précédentes, dans lequel le logement est une enveloppe faite d'un matériau métallique ou d'un composite.

4. Réservoir à double paroi selon la revendication 3,
dans lequel le carénage comprend des moyens
pour contenir une fuite du réservoir.

5. Réservoir à double paroi selon la revendication 1, dans lequel la moitié inférieure du réservoir et le logement comprennent des interfaces de réservoir.

6. Réservoir à double paroi selon la revendication 1, dans lequel le boîtier comprend des capteurs de pression différentielle pour détecter une charge de carburant.
